(19) Europäisches Patentamt
European Patent Office
Office européen des brevets

(11) **EP 2 075 515 B1**

(12) **EUROPEAN PATENT SPECIFICATION**

(45) Date of publication and mention
of the grant of the patent:
**28.02.2018 Bulletin 2018/09**

(51) Int Cl.:
*F25B 1/00* (2006.01)          *F25B 1/053* (2006.01)
*F25B 49/02* (2006.01)

(21) Application number: **07830164.5**

(86) International application number:
**PCT/JP2007/070430**

(22) Date of filing: **19.10.2007**

(87) International publication number:
**WO 2008/047901 (24.04.2008 Gazette 2008/17)**

(54) **HEAT SOURCE DEVICE, HEAT SOURCE SYSTEM, AND METHOD OF CONTROLLING HEAT SOURCE DEVICE**

WÄRMEQUELLENVORRICHTUNG, WÄRMEQUELLENSYSTEM UND VERFAHREN ZUR STEUERUNG EINER WÄRMEQUELLENVORRICHTUNG

DISPOSITIF DE SOURCE DE CHALEUR, SYSTÈME DE SOURCE DE CHALEUR ET PROCÉDÉ DE CONTRÔLE DU DISPOSITIF DE SOURCE DE CHALEUR

(84) Designated Contracting States:
**DE**

(30) Priority: **20.10.2006 JP 2006286693**

(43) Date of publication of application:
**01.07.2009 Bulletin 2009/27**

(73) Proprietor: **Mitsubishi Heavy Industries Thermal Systems, Ltd.
Minato-ku, Tokyo 108-8215 (JP)**

(72) Inventors:
• **UEDA, Kenji
Kiyosu-shi
Aichi 452-8561 (JP)**
• **TAITO, Kazuma
Kiyosu-shi
Aichi 452-8561 (JP)**

• **MATSUO, Minoru
Takasago-shi
Hyogo 676-8686 (JP)**

(74) Representative: **Hoffmann Eitle
Patent- und Rechtsanwälte PartmbB
Arabellastraße 30
81925 München (DE)**

(56) References cited:
GB-A- 2 269 684     JP-A- 10 068 792
JP-A- 10 068 792     JP-A- 10 197 079
JP-A- 56 010 643     JP-A- 2000 111 182
JP-A- 2000 121 175     JP-A- 2000 121 175
JP-A- 2003 336 913

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to heat source apparatuses, exemplified by turbo chillers, to heat source systems, and to methods of controlling heat source apparatuses.

Background Art

Turbo chillers (heat source apparatuses) for compressing a refrigeration medium with a turbo compressor are often used as chillers employed in coolant supplies in large-scale clean rooms in semiconductor fabrication facilities. An inlet vane (prerotation vane for capacity control) for regulating the amount of intake refrigeration medium is provided at a refrigeration-medium intake of the turbo compressor. A control unit of the turbo compressor maintains a constant outlet temperature of coolant supplied to an external load by adjusting the angle of the inlet vane (see Patent Document 1). For example, if the coolant temperature required in the external load is assumed to be 7 °C (preset coolant outlet temperature), control is performed so as to maintain this 7 °C. In addition, there is a preset value, in the prescribed specifications, for a coolant temperature difference between the coolant outlet temperature and the coolant inlet temperature; however, the load of the turbo chiller is designed to be 100% when this coolant temperature difference is at the preset value. For example, when the preset coolant outlet temperature is 7 °C and the coolant temperature difference is 5 °C, the coolant inlet temperature at 100% load is 12 °C.
Patent Document 1: Japanese Examined Utility Model Application, Publication No. HEI-5-10186

Disclosure of Invention

When the outside air temperature is low, such as in winter, the required load in the turbo chiller is reduced and may fall below 10%. When the load is 10%, the coolant temperature difference becomes 0.5 °C (5 °C × 10% = 0.5 °C). If the coolant temperature difference becomes 0.5 °C or less, accurate control becomes difficult due to the precision limitations of temperature gauges for measuring the coolant outlet temperature and the coolant inlet temperature. For example, when using a resistive temperature sensor (JIS A class) in the temperature gauge, the precision of the resistive temperature sensor is ±0.1 °C, and the error of the transducer is ±0.1 °C. Therefore, in one temperature gauge, there is an error of ±0.2 °C, and the errors of two temperature gauges measuring the temperature difference between the coolant outlet and the coolant inlet are superimposed; thus a maximum measurement error of 0.4 °C is assumed. Accordingly, when the load of the turbo chiller falls below 10% and the coolant temperature difference falls below 0.5 °C, control is performed within the error range of the temperature gauges, and it is difficult to perform temperature control with continuous operation; therefore, the turbo chiller is operated in a low-load mode in which it is temporarily stopped (low load stopping), and starting and stopping are repeated while checking for a rise again in the coolant temperature.
Accordingly, when the load is low, the turbo chiller is operated intermittently, which is undesirable in terms of changing the coolant temperature, and there is thus a demand for a turbo chiller that can be continuously operated even with low load.
In addition, there is a demand for a technology that allows measurement of the coolant outlet temperature and the coolant inlet temperature with high precision, so as to enable continuous operation even when the load on the turbo chiller is low.
When installing a turbo chiller, regulation is carried out at the time of installation. Generally, because installation is carried out coming up to summer when a demand for cooling is expected, the installation period of turbo chillers is winter. In winter, the load is reduced because the outside air temperature is low and falls significantly, below 10% load. Thus, continuous operation is not possible, as described above, and therefore regulation is not possible. In practice, therefore, a boiler or the like for regulation is newly installed temporarily, to produce a load. Because the boiler installed at this time is used only for regulation, it is removed after completing regulation. This increases the cost of installing the turbo chiller. Therefore, there is a demand for a turbo chiller that can be operated continuously even with low load and that is capable of being regulated without installing a separate boiler. Document JP-A-2003 336913 discloses a heat source apparatus according to the preamble of claim 1.
The present invention has been conceived in light of these circumstances, and an object thereof is to provide a heat source apparatus (turbo chiller) that can operate continuously even with a low load, for example, less than 10% load.
In order to solve the problems described above, the heat source apparatus of the present invention employs the following solutions.
Specifically, a heat source apparatus of the present invention includes a compressor for compressing a refrigeration medium; a condenser for condensing the refrigeration medium compressed by the compressor; an expansion valve for expanding the refrigeration medium condensed by the condenser; an evaporator for evaporating the refrigeration medium expanded by the expansion valve; a coolant supply pipe for supplying coolant heat exchanged with the evaporator to an external load; a coolant outlet temperature measuring part for measuring a coolant outlet temperature of the coolant flowing through the coolant supply pipe; a coolant return pipe for performing heat exchange with the external load and for returning the coolant to the evaporator; a coolant inlet temperature measuring part for measuring a coolant inlet temperature of the coolant flowing through the coolant return pipe; and a control unit for performing control so that the coolant outlet temperature is a preset coolant outlet temperature, wherein the control unit has a low-load mode in which the heat source apparatus is controlled to repeatedly switch between stopping and starting when the coolant inlet temperature measured by the coolant inlet temperature measuring part is equal to or lower than a first temperature forming a prescribed temperature difference with respect to the preset coolant outlet temperature, and wherein the control unit has a stop limit mode in which the heat source apparatus is stopped when the coolant inlet temperature or the coolant outlet temperature is equal to or lower than a second temperature below the first temperature.

When the load which the external load requires in the heat source apparatus decreases, the temperature difference between the preset coolant outlet temperature and the coolant inlet temperature decreases. For example, in the case of a temperature difference of 5 °C at 100% load (for example, a coolant inlet temperature of 12 °C for a preset coolant outlet temperature of 7 °C), when the load decreases to 10%, the temperature difference is 0.5 °C. Thus, the load decreases and the temperature difference between the preset coolant outlet temperature and the coolant inlet temperature decreases, and when the coolant inlet temperature falls below the first temperature, the control unit temporarily stops the heat source apparatus and repeats the operation for temporarily starting it up again, thus performing control for realizing the preset coolant outlet temperature. Thus, in the case of low load, a low-load mode in which the heat source apparatus is repeatedly stopped and started is provided so as to handle low loads.

In the heat source apparatus of this invention, a stop limit mode is provided for stopping the heat source apparatus only when the coolant outlet temperature or the coolant inlet temperature is equal to or lower than the second temperature, which is below the first temperature. With this stop limit mode, the heat source apparatus is not stopped even when the coolant inlet temperature falls below the first temperature; the heat source apparatus is stopped for the first time when the coolant inlet temperature or the coolant outlet temperature is equal to or lower than the second temperature. That is to say, the heat source apparatus tends not to stop even with low load, thus realizing a mode in which continuous operation is possible. Accordingly, even during regulation when installing the heat source apparatus in winter, it is not necessary to provide a separate boiler or the like for applying a load larger than the load at which the apparatus is stopped in the low-load mode.

According to the heat source apparatus of the present invention, the second temperature may be lower than the preset coolant outlet temperature.

By employing a second temperature lower than the preset coolant outlet temperature, it is possible to effectively avoid the heat source stopping when the load is low. The reason is that, because the coolant outlet temperature is controlled by the control unit so as to become the preset coolant outlet temperature, the coolant outlet temperature and the coolant inlet temperature are never smaller than the preset coolant outlet temperature in practice. However, due to measurement errors in the coolant outlet temperature measuring part and the coolant inlet temperature measuring part, the measurement values thereof may be lower than the preset coolant outlet temperature; therefore, it is preferable to set the second temperature in consideration of these measurement errors. For example, if the error of the temperature measuring part is 0.2 °C, when considering both the coolant inlet and the coolant outlet, there is the possibility of a maximum error of 0.4 °C; therefore, if the preset coolant outlet temperature is 7 °C, it is preferable to set the second temperature to 6.5 °C or lower.

According to the heat source apparatus of the present invention, the second temperature may be equal to or higher than a minimum temperature which the external load permits.

Generally, the external load requires coolant at the preset coolant outlet temperature; however, down to a temperature lower than this preset coolant outlet temperature (minimum temperature) is permissible. Therefore, the second temperature is set in consideration of this minimum temperature. Accordingly, the apparatus can be operated continuously, as far as possible, without stopping it even when the load is low.

According to the heat source apparatus of the present invention, the control unit may be capable of selectively switching between the low-load mode and the stop limit mode.

Because it is possible to selectively switch between the low-load mode and the stop limit mode, for example, it is possible to set the low-load mode so as to enable low-load operation by turning the heat source apparatus on and off during normal operation, and to set the stop limit mode so as to enable regulation when the heat source apparatus is installed.

The switching may be performed by providing a physical switch on a control panel of the heat source apparatus, and the operator operates this switch. In addition, a signal may be received from a central control room to perform switching remotely. In these cases, a microcontroller provided on a control board of the heat source apparatus toggles an internal flag for each mode.

According to the heat source apparatus of the present invention, the control unit can selectively switch between each of the modes during operation of the heat source apparatus, and when switching from the stop limit mode to the low-load mode, the low-load mode may be executed after a prescribed period of time has elapsed.

When the stop limit mode is selected to avoid stopping the heat source apparatus during periods when the load is low, such as in winter, upon switching to the low-load mode, the coolant inlet temperature falls below the first temperature; therefore, there is a risk of the heat source apparatus suddenly stopping. To avoid such a sudden stop during operation, the low-load mode is executed after a prescribed period of time has elapsed, even though switching from the stop limit mode to the low-load mode is performed.

The heat source apparatus of the present invention may further include a coolant supplying part for supplying coolant for absorbing heat of condensation from the refrigeration medium flowing through the condenser, wherein, when the temperature of the coolant flowing into the condenser is at a prescribed value or lower, the control unit can select the stop limit mode.

When the temperature of the coolant supplied to the condenser is high, a minimum refrigeration-medium circulation level or above is required, corresponding to a pressure difference between the condenser and the evaporator, and the low-load operation, in which the refrigeration-medium circulation level is small, is never achieved. Therefore, it is possible to select the stop limit mode only if the temperature of the coolant flowing into the condenser is a prescribed value or lower.

According to the heat source apparatus of the present invention, the coolant outlet temperature measuring part and/or the coolant inlet temperature measuring part may include a plurality of temperature sensors provided at different positions in a circumferential direction at an identical radial position in an identical cross section of the coolant supply pipe and/or the coolant return pipe, and the control unit may use an average value of the output values from each temperature sensor.

The temperature of the coolant flowing through the coolant pipe may have a circumferential temperature distribution when viewed in a cross section. This is particularly prominent because the liquid surface of the refrigeration medium inside the evaporator rises and falls when the coolant supply pipe is horizontally connected to the evaporator. In the heat source apparatus of the present invention, because a plurality of temperature sensors are provided at different circumferential positions at the same radial position in the same cross section of the pipe, and the average value of the output values from these temperature sensors is used, it is possible to perform evaluation using a coolant temperature close to the actual temperature.

In addition, a heat source system of the present invention includes a plurality of any of the heat source apparatuses described above.

In the case of a heat source system equipped with a plurality of heat source apparatuses, controlled-number-of-units operation is performed for increasing and decreasing the number of heat source apparatuses according to the external load demand. Specifically, when the load is low, a first heat source apparatus is started up, and second and third units are started up as the load increases, thus performing simultaneous operation of multiple units. When the load decreases, a heat source apparatus is stopped according to the load to reduce the number of units in operation one-by-one. In such a heat source system, because the heat source apparatuses are provided with the stop limit mode and the low-load mode, the stop limit mode is selected for the first heat source apparatus that is started up first at times of low load and stopped last, and the low-load mode is selected for the second and subsequent heat source apparatuses that are started up and then stopped before the first one. By doing so, when operating the system with a reduced number of units, the second and subsequent heat source apparatuses are quickly stopped in the low-load mode, and the first heat source apparatus that is stopped last can continue to operate so as not to stop, by means of the stop limit mode. Thus, it is possible to realize a heat source system that can operate smoothly with a reduced number of units and that does not stop, even with low load.

In addition, in a control method for a heat source apparatus of the present invention, which includes a compressor for compressing a refrigeration medium, a condenser for condensing the refrigeration medium compressed by the compressor, an expansion valve for expanding the refrigeration medium condensed by the condenser, an evaporator for evaporating the refrigeration medium expanded by the expansion valve, a coolant supply pipe for supplying coolant heat exchanged with the evaporator to an external load, a coolant outlet temperature measuring part for measuring a coolant outlet temperature of the coolant flowing through the coolant supply pipe, a coolant return pipe for performing heat exchange with the external load and for returning the coolant to the evaporator, and a coolant inlet temperature measuring part for measuring a coolant inlet temperature of the coolant flowing through the coolant return pipe; which performs control so that the coolant outlet temperature is a preset coolant outlet temperature; and which executes a low-load mode in which stopping and starting of the heat source apparatus is repeatedly controlled when the coolant inlet temperature measured by the coolant inlet temperature measuring part is equal to or lower than a first temperature forming a prescribed temperature difference with respect to the preset coolant outlet temperature, the control method for the heat source apparatus includes executing a stop limit mode for stopping the heat source apparatus when the coolant inlet temperature or the coolant outlet temperature is equal to or lower than a second temperature below the first temperature.

When the load which the external load requires in the heat source apparatus decreases, the temperature difference between the preset coolant outlet temperature and the coolant inlet temperature decreases. For example, in the case of a temperature difference of 5 °C at 100% load (for example, a coolant inlet temperature of 12 °C for a preset coolant outlet temperature of 7 °C), when the load decreases to 10%, the temperature difference is 0.5 °C. Thus, the load decreases and the temperature difference between the preset coolant outlet temperature and the coolant inlet temperature decreases, and when the coolant inlet temperature falls below the first temperature, the heat source apparatus is temporarily stopped and the operation for temporarily starting it up again is repeated, thus performing control for realizing the preset coolant outlet temperature. Thus, in the case of low load, a low-load mode in which the heat source apparatus is repeatedly stopped and started is provided so as to handle low loads.

In the heat source apparatus control method of this invention, a stop limit mode is provided for stopping the heat source apparatus only when the coolant outlet temperature or the coolant inlet temperature is equal to or lower than the second temperature, which is lower than the first temperature. With this stop limit mode, the heat source apparatus is not stopped even when the coolant inlet temperature falls below the first temperature; the heat source apparatus is stopped for the first time when the coolant inlet temperature or the coolant outlet temperature is equal to or lower than the second temperature. That is to say, the heat source apparatus tends not to stop even with low load, thus realizing a mode in which continuous operation is possible. Accordingly, even during regulated operation when installing the heat source apparatus in winter, it is not necessary to provide a separate boiler or the like for applying a load larger than the load at which the apparatus is stopped in the low-load mode.

According to the present invention, because the stop limit mode is provided for stopping the heat source apparatus only when the coolant outlet temperature or the coolant inlet temperature is equal to or lower than the second temperature which is lower than the first temperature, the heat source apparatus is not stopped even when the coolant inlet temperature falls below the first temperature; the heat source apparatus is stopped for the first time when the coolant inlet temperature or the coolant outlet temperature is becomes the second temperature or lower, thus making it possible to continuously operate the heat source apparatus as far as possible without stopping it, even with low load.

Brief Description of Drawings

[FIG. 1] Fig. 1 is a schematic diagram showing a turbo chiller according to an embodiment of the present invention.
[FIG. 2] Fig. 2 is a cross sectional view showing a cross section of an evaporator in Fig. 1.
[FIG. 3] Fig. 3 is a cross sectional view showing a cross section of a coolant supply pipe in Fig. 1.
[FIG. 4] Fig. 4 is a graph showing indicated values from coolant outlet temperature sensors in Fig. 1 with respect to time.
[FIG. 5] Fig. 5 is a graph showing steady-state indicated values from the coolant outlet temperature sensors in Fig. 1 with respect to time.
[FIG. 6] Fig. 6 is a schematic diagram showing a refrigeration-medium circuit configuration of the turbo chiller in Fig. 1.
[FIG. 7] Fig. 7 is a flowchart showing a low-load mode and a stop limit mode.

Explanation of Reference Signs:

1: turbo chiller (heat source apparatus)
3: compressor
5: condenser
7: expansion valve
9: evaporator
34: coolant return pipe
35: coolant supply pipe
40: coolant inlet temperature sensor
42: coolant outlet temperature sensor
50: control unit

Best Mode for Carrying Out the Invention

Embodiments of the present invention will be described below with reference to the drawings.

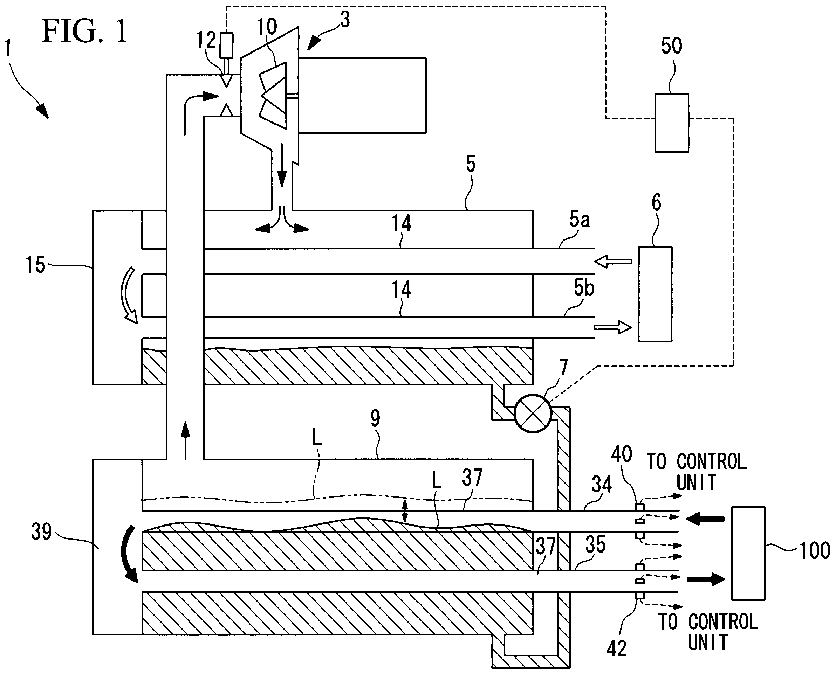

Fig. 1 shows, in outline, the configuration of a turbo chiller (heat source apparatus) 1 of the present invention.

As shown in Fig. 1, the turbo chiller 1 includes a turbo compressor 3 for compressing a refrigeration medium, a condenser 5 for condensing the refrigeration medium compressed by the compressor 3, an expansion valve 7 for expanding liquid refrigeration medium condensed by the condenser 5, and an evaporator 9 for evaporating the refrigeration medium expanded by the expansion valve 7.

The compressor 3 is a turbo centrifugal compressor provided with a centrifugal impeller 10 and is rotationally driven by an electric motor.

At a refrigeration-medium intake of the compressor 3, an inlet vane 12 is provided for adjusting the intake level of the intake refrigeration medium. The degree of opening of this inlet vane 12 is controlled by a control unit 50 of the turbo chiller 1.

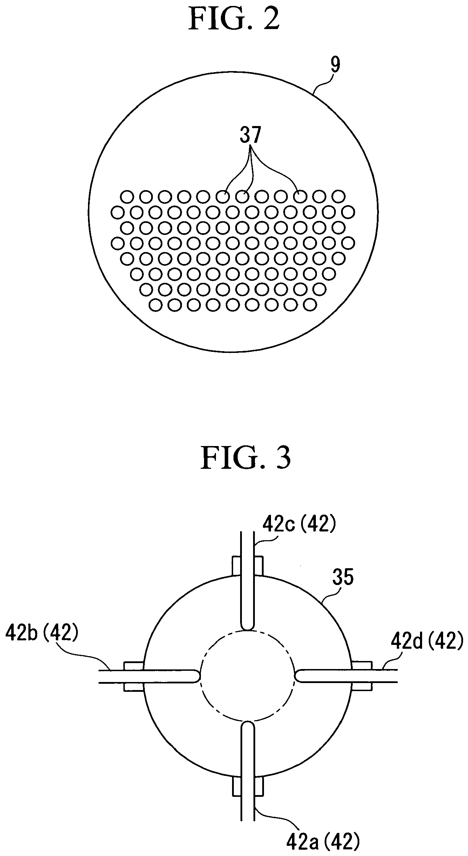

The condenser 5 is a shell-and-pipe type heat exchanger. A coolant return pipe 5a and a coolant supply pipe 5b are connected to the condenser 5. The coolant flowing into the condenser 5 from the coolant return pipe 5a passes through a heat exchange pipe 14, is reversed at a head 15, and then passes through a heat exchange pipe 14 and flows out to the coolant supply pipe 5b. Thus, heat exchange occurs between the coolant and the refrigeration medium inside the shell, and heat of condensation is removed from the refrigeration medium. For ease of understanding, the heat exchange pipes 14 are assumed to be two simple tubes in Fig. 1; in practice, however, they are numerous narrow tubes provided inside the entire shell body (for reference, see Fig. 2 showing the evaporator 9). The coolant tubes 5a and 5b are connected to an externally provided cooling tower 6.

The expansion valve 7, which is provided between the condenser 5 and the evaporator 9, isenthalpically expands the liquid refrigeration medium supplied from the condenser 5 by throttling.

The degree of opening of the expansion valve 7 is controlled by a control unit 50 of the turbo chiller 1.

The evaporator 9 is a shell-and-pipe heat exchanger. A coolant return pipe 34 and a coolant supply pipe 35 are horizontally connected to the evaporator 9. The coolant flowing into the evaporator 9 from the coolant return pipe 34 passes through a heat-exchange pipe 37, is reversed at a head 39, and then passes through a heat exchange pipe 37 and flows out to the coolant supply pipe 35. Although the heat exchange pipes 37 are assumed to be two simple tubes in Fig. 1 for the sake of simplifying the explanation, in practice they are assumed to be numerous narrow tubes provided in the shell, as shown in Fig. 2. Thus, heat exchange is performed between the coolant and the refrigeration medium inside the shell, and the refrigeration medium chills the coolant by absorbing the heat of evaporation from the coolant. The chilled coolant is sent to an external load 100 via the coolant supply pipe 35 to cool or heat the external load 100.

A plurality of coolant inlet temperature sensors 40 for measuring the coolant inlet temperature TE0 directly before flowing into the evaporator 9 are provided at the downstream side in the coolant return pipe 34, and a plurality of coolant outlet temperature sensors 42 for measuring the coolant outlet temperature TE' directly after flowing out from the evaporator 9 are provided at the upstream side in the coolant supply pipe 35. It is preferable to use JIS A class resistive temperature sensors as the temperature sensors. Generally, the coolant inlet temperature TE0 is set to 12 °C, and the coolant outlet temperature TE' is set to 7 °C.

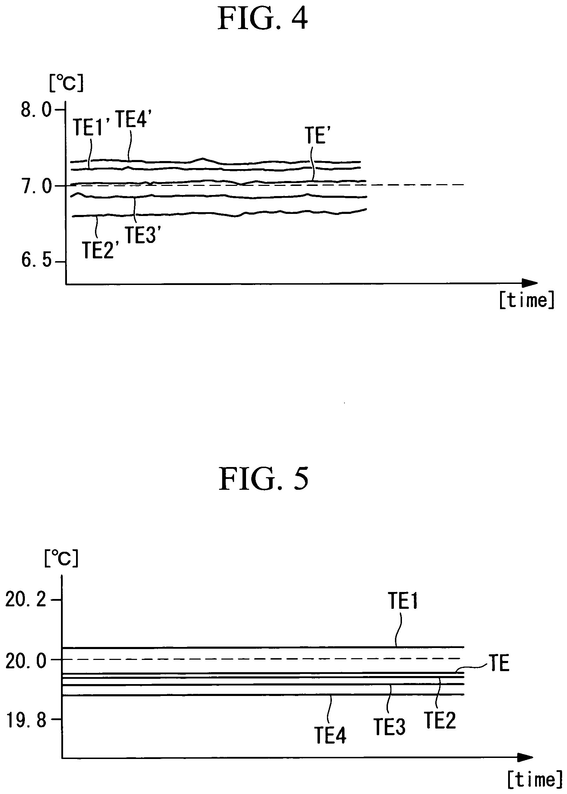

Fig. 3 shows a cross section of the coolant supply pipe 35. As shown in this figure, four temperature sensors 42a, 42b, 42c, and 42d are provided in the same lateral cross section of the coolant supply pipe 35. Temperature-sensing portions at the tip of each temperature sensor 42 are disposed at the same radial position and are provided at different positions in the circumferential direction, at 90° intervals. That is to say, the first temperature sensor 42a is provided at the 6 o'clock position at the lowermost end, the second temperature sensor 42b is provided at the 9 o'clock position, which is the intermediate position in the height direction, the third temperature sensor 42c is provided at the 12 o'clock position at the uppermost end, and the fourth temperature sensor 42d is provided at the 3 o'clock position, which is the intermediate position in the height direction. The coolant outlet temperature TE' is calculated by using these four temperature sensors 42. More specifically, the arithmetic mean of the four temperature outputs is used. That is, as shown in Fig. 4, when the temperature output of the first temperature sensor 42a is TE1', the temperature output of the second temperature sensor 42b is TE2', the temperature output of the third temperature sensor 42c is TE3', and the temperature output of the fourth temperature sensor 42d is TE4', the coolant outlet temperature TE' is represented by the following:

$$TE' = (TE1' + TE2' + TE3' + TE4') / 4$$

By using the arithmetic mean of the plurality of temperature sensors 42 in this way, it is possible to improve the precision of the coolant outlet temperature TE'. This is because, as described above, multiple heat exchange tubes 37 are provided in the evaporator 9 (see Fig. 2), the liquid level L of the liquid refrigeration medium does not fill the entire evaporator 9, as shown in Fig. 1, and the liquid level L of the refrigeration medium thus moves up and down; therefore, the temperature of the coolant after flowing through the heat exchange tubes 37 differs according to the positions of the heat exchange tubes 37. Because the coolant flows to the coolant supply pipe 35 after the flows are combined, it flows into the coolant supply pipe 35 in an insufficiently mixed state. Therefore, the coolant directly after flowing into the coolant supply pipe 35 has a temperature distribution in the same cross section (see Fig. 4). Therefore, it is effective to employ the arithmetic mean using the plurality of temperature sensors, as in this embodiment.

To improve the precision of the coolant outlet temperature TE', the following calibration is performed.

As shown in Fig. 5, the indicated values from each temperature sensors 42 are obtained when the coolant outlet temperature is in a steady state without performing heat exchange with the evaporator 9, such as when the turbo chiller 1 is stopped. Then, the difference between the indicated value of each temperature sensor and the average value TE is calculated. For example, for the first temperature sensor, the difference $\Delta TE1 = TE1 - TE$ is calculated. In the steady state, no distribution occurs in the coolant temperature inside the pipe in the same cross-section, and the average value and the indicated value of each temperature sensor must be the same. Therefore, the difference $\Delta TE1$ is considered as an error relative to the average value TE. Accordingly, this difference is corrected in the control unit 50 of the turbo chiller 1. For example, an offset value for correcting drift depending on the mounting state of the temperature sensor can be set in a microcontroller board of the control unit 50. Therefore, this offset value is changed on the basis of the above-mentioned difference. By calibrating the offset value of each temperature sensor in this way by using the indicated value of the temperature sensors in the steady state, it is possible to improve the precision of the coolant outlet temperature.

Such calibration of the offset value for each temperature sensor is carried out periodically, and is weighted by the frequency is performed. For example, in the last ten measurements, even if a characteristic temperature is output only for the most recent one, the last 10 temperatures are taken into account rather than using the temperature for only this one time as is. For example, frequency weighting is performed so as to use the average of the last 10 values. Also, so as not to produce an anomalous offset value (calibration range), a maximum offset value (for example, 1 °C) is set, and no offset exceeding this maximum value is applied. Accordingly, it is possible to reduce large fluctuations in the temperature sensor outputs, thus improving the measurement precision. When the maximum offset value set in this way is substantially exceeded, the temperature sensor is considered to be abnormal, and it is preferable to omit it in subsequent sensing.

In order to compensate for a transient response lag in the temperature sensors, a time constant for a first-order lag may be determined in advance, and the error due to the response lag may be corrected by taking account of this time constant. Using a resistive temperature sensor, as in this embodiment, is effective because the heat capacity of the sensing part cannot be neglected at the time of a transient response. More specifically, for each temperature sensor, the temperature sensor at room temperature is dipped into cold water or warm water and the temperature history due to the step response is measured to experimentally determine the time constant.

In this embodiment, in order to improve the precision of the coolant inlet temperature TE0, four temperature sensors 40 are also provided in the coolant return pipe 34 (see Fig. 1). This is effective when a temperature distribution also occurs in the same cross-section in the coolant returning from the external load 100. As shown in Fig. 3, the temperature sensors 40 may be provided in the same cross section and shifted by angles of 90° in the circumferential direction.

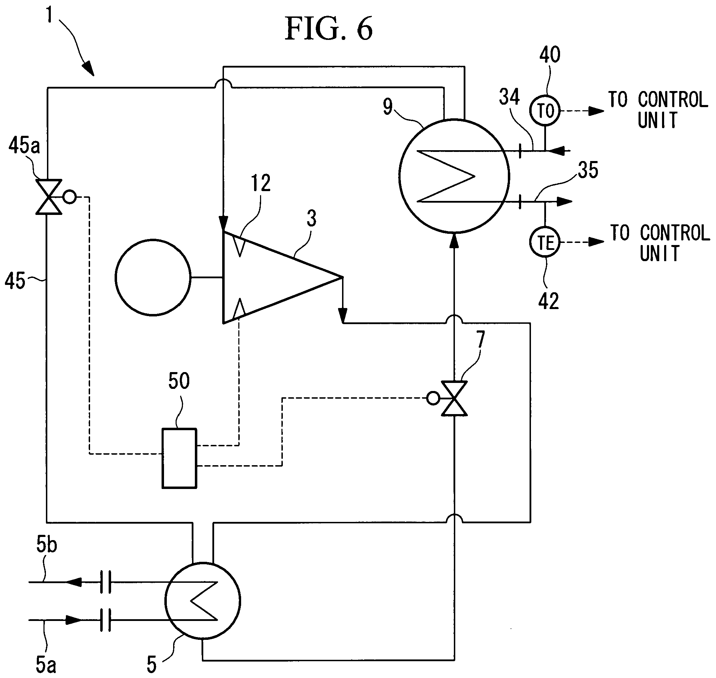

Fig. 6 shows the configuration of a refrigeration circuit in the turbo chiller 1 shown in Fig. 1.

This figure shows a hot-gas bypass pipe 45, which is omitted in Fig. 1. The hot-gas bypass pipe 45 is provided between a discharge side of the compressor 3 and an intake side of the compressor 3. A hot-gas bypass valve 45a for regulating the flow rate of the refrigeration medium is provided in the hot-gas bypass pipe 45. The high-temperature, high-pressure discharged refrigeration medium whose flow rate is regulated by this hot-gas bypass valve 45a is bypassed to the intake side of the compressor 3. The degree of opening of the hot-gas bypass valve 45a is adjusted by the control unit 50 of the turbo chiller 1.

Next, the operation of the turbo chiller 1 with the above-described configuration will be explained.

The compressor 3 is driven by the electric motor to be rotated at a prescribed frequency. The degree of opening of the inlet vane 12 is adjusted by the control unit 50 so as to achieve a prescribed temperature (for example, a coolant outlet temperature of 7 °C).

Regarding the high-temperature, high-pressure gas refrigeration medium discharged from the compressor 3, a part thereof passes through the hot-gas bypass pipe 45, where the refrigeration medium flow rate is regulated by the hot-gas bypass valve 45a, and is then guided to the compressor 3.

The low-pressure gas refrigeration medium taken in from the evaporator 9 is compressed by the compressor 3 to form high-pressure gas refrigeration medium. The high-pressure gas refrigeration medium discharged from the compressor 3 is guided to the condenser 5.

In the condenser 5, the high-pressure gas refrigeration medium is cooled substantially isobarically by the coolant guided from the cooling tower 6 (see Fig. 1) via the coolant tubes 5a and 5b, to form high-pressure liquid refrigeration medium. The high-pressure liquid refrigeration medium is guided towards the expansion valve 7 and is made to undergo isenthalpic expansion by this expansion valve 7. The refrigeration medium thus expanded is evaporated at the evaporator 9 and absorbs heat from the coolant flowing in the heat exchange pipe 37. Thus, the coolant flowing in from the coolant return pipe 34 at 12 °C is cooled down to 7 °C and returns to the external load side via the coolant supply pipe 35. At this time, the coolant outlet temperature and the coolant inlet temperature are calculated by the respective temperature sensors 40 and 42, and the control unit 50 controls the degrees of opening of the inlet vane 12, the expansion valve 7, the hot-gas bypass valve 45a, etc. on the basis of these calculated values. The arithmetic means of the calculated values of the temperature sensors 40 and 42 are taken, as described above, and the average values are used in the control unit 50.

The low-pressure gas refrigeration medium evaporated at the evaporator 9 is guided to the compressor 3 and is recompressed.

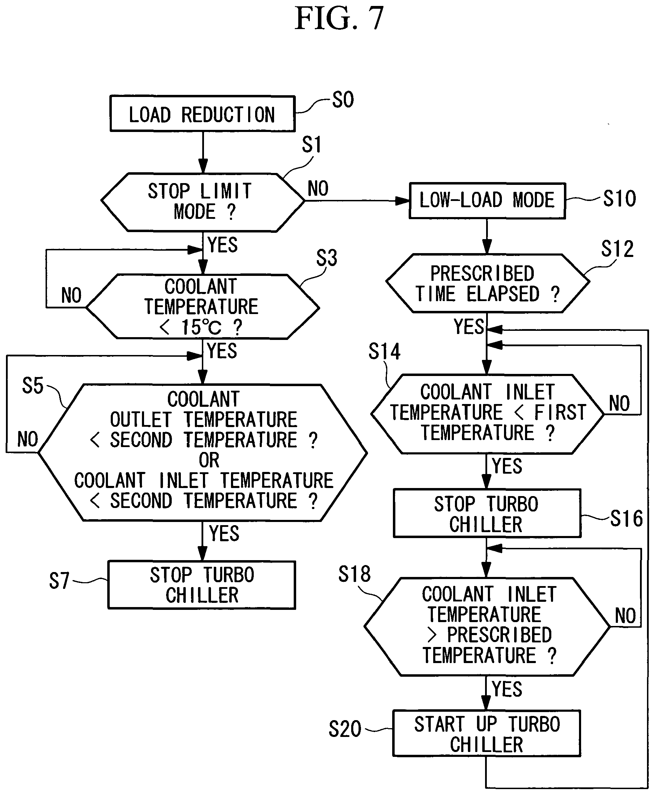

Next, the method of operating the turbo chiller 1 when the load is small, such as in winter, will be described using Fig. 7.

A physical switch for switching between a low-load mode and a stop limit mode, to be described later, is provided in the control unit 50 of the turbo chiller 1. This switch is switched by the operator. Based on the setting of this switch, if it is desired not to stop the apparatus even though the load is low, the stop limit mode is selected, and if it is desired to stop the apparatus when the load is low, the low-load mode is selected. Instead of a physical switch, it is also possible to receive a signal from a central control room which performs overall control of the system, including the turbo chiller 1, and to perform switching remotely.

First, the low-load mode will be explained.

When the load of the turbo chiller 1 becomes small (step S0) and the low-load mode is selected in the control unit 50 ("NO" at step S1), the process proceeds to step S10. Then, in Step S12, it is determined whether or not a prescribed time has elapsed. By doing so, the turbo chiller 1 is prevented from stopping immediately after changing to the low-load mode. For example, when switching from the stop limit mode to the low-load mode in the transition from winter to summer, the operator may sometimes determine that the coolant inlet temperature is sufficiently high by looking at the temperature gauge provided for reference on the equipment, and may change over a switch on the control unit 50. At this time, even if the temperature gauge on the equipment exceeds the first temperature (see Step S14 described later), it may be assumed that the temperature of the temperature sensors 40 ascertained by the control unit 50 is lower than the first temperature. The reason is that, because the coolant inlet temperature in this embodiment is measured with high precision using a plurality of temperature sensors, as shown in Fig. 1, a large discrepancy from the relatively low-precision temperature gauge on the equipment must be sufficiently taken into account. In such a case, the turbo chiller 1 would be stopped immediately after changing over the switch on the control unit 50. To avoid this issue, it is arranged to wait for a prescribed time in Step S12.

After the prescribed time has elapsed in Step S12, the process proceeds to Step S14, where it is determined whether or not the coolant inlet temperature measured by the temperature sensors 40 falls below the first temperature. The first temperature is set higher than a preset coolant outlet temperature Toutset which corresponds to the coolant temperature required in the external load, and is set in a range exceeding the error of the temperature sensors. For example, when the preset coolant outlet temperature Toutset is 7 °C, if the error of the temperature sensors is 0.4 °C, the first temperature is set to 7.5 °C. The first temperature can be arbitrarily changed.

When the coolant inlet temperature falls below the first temperature, the process proceeds to Step S16, where the turbo chiller 1 is stopped. The coolant inlet temperature falling below the first temperature means that control is imposed within the range of error of the temperature sensor; therefore, control is performed to temporarily stop the turbo chiller 1. Then, when the coolant inlet temperature exceeds a prescribed value set to the first temperature or higher (step S18), the process proceeds to Step S20, where the turbo chiller 1 is started up again. Then, the operation continues again until the coolant inlet temperature falls below the first temperature (Step S14). In the low-load mode, low-load operation is performed by repeating stopping and starting in this way.

Next, the stop limit mode is explained.

When the load of the turbo chiller 1 becomes low (step S0) and the stop limit mode is selected in the control unit 50 (step S1), it is determined whether or not the coolant temperature obtained by the temperature sensors (not shown) provided in the coolant return pipe 5a falls below 15 °C. If the coolant temperature is 15 °C or above, the process does not proceed to the next step S5. This is because, when the coolant temperature is 15 °C or above, it is conceivable that a fixed load or above is required in the turbo chiller 1, and in such a case, the stop limit mode should not be performed. By doing so, the issue of the turbo chiller 1 stopping even though the load is not low can be avoided. Regarding the threshold coolant temperature of 15 °C, another temperature may be used, and it can be arbitrarily changed.

When it is determined in Step S3 that the coolant temperature falls below 15 °C, the process proceeds to step S5, where it is determined whether or not the coolant outlet temperature obtained by the coolant outlet temperature sensors 42 or the coolant inlet temperature obtained by the coolant inlet temperature sensors 40 falls below the second temperature. This second temperature is set lower than the first temperature. By doing so, even though the turbo chiller is stopped when the coolant inlet temperature falls below the first temperature in the low-load mode, it is not stopped in the stop limit mode, and control to continue running is executed. Also, in the stop limit mode, control is performed to stop the turbo chiller also when the coolant outlet temperature falls below the second temperature. However, this is because there is a possibility of not only the coolant inlet temperature but also the coolant outlet temperature falling below the second temperature, since the measurement value is within the error range of the temperature sensors when it is in the range of the second temperature, which is lower than the first temperature in which the error in the temperature sensors with respect to the preset coolant outlet temperature Toutset is taken into account.

The second temperature is lower than the preset coolant outlet temperature Toutset. Thus, it is possible to effectively avoid stopping the turbo chiller 1 at times of low load. The reason is that, because the coolant outlet temperature is controlled by the control unit 50 so as to become the preset coolant outlet temperature Toutset, in practice, the coolant outlet temperature and the coolant inlet temperature do not become lower than the preset coolant outlet temperature Toutset. However, because these measurement values may fall below the preset coolant outlet temperature Toutset due to measurement error in the temperature sensors, it is preferable to decide the second temperature in consideration of this measurement error. For example, if the error in the temperature sensors is 0.2 °C, when both the coolant inlet and the coolant outlet are taken into account, an error of 0.4 °C should be considered; therefore, if the preset coolant outlet temperature Toutset is 7 °C, it is preferable to make the second temperature 6.5 °C or lower.

The second temperature is set at or above the minimum temperature allowed for the external load. In general, the external load requires the preset coolant temperature Toutset, but it is designed to allow down to a minimum temperature lower than this preset coolant temperature Toutset. If a temperature at or above this minimum temperature, preferably close to the minimum temperature, is set as the second temperature, control for continuously operating the turbo chiller 1 without stopping can be realized. For example, if the minimum temperature is 5 °C, the second temperature is also set to 5 °C.

When it is determined in Step S5 that the coolant outlet temperature or the coolant inlet temperature falls below the second temperature, the turbo chiller 1 is stopped. When the coolant outlet temperature or the coolant inlet temperature falls below the second temperature, this means that the load is infinitesimally close to 0%; therefore, the turbo chiller 1 is stopped.

The turbo chiller described above provides the following operating advantages.

Because the stop limit mode is provided for stopping the turbo chiller 1 only when either the coolant outlet temperature or the coolant inlet temperature becomes equal to or lower than the second temperature, which is lower than the first temperature, control is realized for stopping the turbo chiller 1 for the first time when either the coolant inlet temperature or the coolant outlet temperature becomes the second temperature or lower, without stopping the turbo chiller 1 even when the coolant inlet temperature falls below the first temperature. In other words, even with a low load, a mode is realized in which the turbo chiller 1 does not easily stop. By doing so, even during regulation when the turbo chiller 1 is installed in winter, it is not necessary to install a separate boiler or the like for applying a load larger than the load at which the turbo chiller 1 is stopped in the low-load mode. Therefore, even in winter, it is possible to continue operating with a low load, enabling regulation involving no cost.

Furthermore, even in initial operating periods where the load is low, by means of the low-load mode, it is possible to avoid an operation in which the turbo chiller is repeatedly started and stopped.

In the case of a heat source system equipped with a plurality of the turbo chillers 1 of this embodiment, controlled-number-of-units operation is performed for increasing and decreasing the number of turbo chillers 1 according to the external load demand. Specifically, when the load is low, a first turbo chiller 1 is started up, and second and third units are started up as the load increases, thus performing simultaneous operation of multiple units. When the load decreases, a turbo chiller 1 is stopped according to the load to reduce the number of units in operation one-by-one. In such a heat source system, it is possible to switch between the stop limit mode and the low-load mode by using the switch on the control unit 50 of the turbo chiller 1; therefore, at times of low load, the stop limit mode is selected for the first turbo chiller 1 which that is started up first and stopped last, and the low-load mode is selected for the second and subsequent turbo chillers 1 that are started up and then stopped before the first one. By doing so, when operating the system with a reduced number of units, the second and subsequent turbo chillers 1 are quickly stopped in the low-load mode, and the first turbo chiller 1 that is stopped last can continue to operate so as not to stop by means of the stop limit mode even with a low load. Thus, it is possible to realize a heat source system that can operate smoothly with a reduced number of units and that does not stop, even with a low load.

In this embodiment, the turbo chiller 1 that exclusively performs a cooling operation has been described. However, the present invention can also be employed in a heat-pump type turbo chiller provided with a heat pump function.

Moreover, although a turbo chiller has been described as an example of a heat source apparatus, other types of heat source apparatuses may be used, for example, a screw chiller.

**Claims**

1. A heat source apparatus comprising:

   a compressor for compressing a refrigeration medium;

a condenser for condensing the refrigeration medium compressed by the compressor;
an expansion valve for expanding the refrigeration medium condensed by the condenser;
an evaporator for evaporating the refrigeration medium expanded by the expansion valve;
a coolant supply pipe for supplying coolant heat exchanged with the evaporator to an external load;
a coolant outlet temperature measuring part for measuring a coolant outlet temperature of the coolant flowing through the coolant supply pipe;
a coolant return pipe for performing heat exchange with the external load and for returning the coolant to the evaporator;
a coolant inlet temperature measuring part for measuring a coolant inlet temperature of the coolant flowing through the coolant return pipe; and
a control unit for performing control so that the coolant outlet temperature is a preset coolant outlet temperature, **characterised in that** the control unit has a low-load mode in which the heat source apparatus is controlled to repeatedly switch between stopping and starting when the coolant inlet temperature measured by the coolant inlet temperature measuring part is equal to or lower than a first temperature forming a prescribed temperature difference with respect to the preset coolant outlet temperature, and
wherein the control unit has a stop limit mode in which the heat source apparatus is stopped when the coolant inlet temperature or the coolant outlet temperature is equal to or lower than a second temperature below the first temperature.

2. A heat source apparatus according to Claim 1, wherein the second temperature is lower than the preset coolant outlet temperature.

3. A heat source apparatus according to Claim 1 or 2, wherein the second temperature is equal to or higher than a minimum temperature which the external load permits.

4. A heat source apparatus according to one of Claims 1 to 3, wherein the control unit can selectively switch between the low-load mode and the stop limit mode.

5. A heat source apparatus according to Claim 4, wherein the control unit can selectively switch between each of the modes during operation of the heat source apparatus, and when switching from the stop limit mode to the low-load mode, the low-load mode is executed after a prescribed period of time has elapsed.

6. A heat source apparatus according to Claim 4 or 5, further comprising:

a coolant supplying part for supplying coolant for absorbing heat of condensation from the refrigeration medium flowing through the condenser,
wherein, when the temperature of the coolant flowing into the condenser is at a prescribed value or lower, the control unit can select the stop limit mode.

7. A heat source apparatus according to one of Claims 1 to 6, wherein the coolant outlet temperature measuring part and/or the coolant inlet temperature measuring part comprise a plurality of temperature sensors provided at different positions in a circumferential direction at an identical radial position in an identical cross section of the coolant supply pipe and/or the coolant return pipe, and
the control unit uses an average value of the output values from each temperature sensor.

8. A heat source system comprising a plurality of the heat source apparatuses according to one of Claim 1 to 7.

9. A control method for a heat source apparatus which includes

a compressor for compressing a refrigeration medium,
a condenser for condensing the refrigeration medium compressed by the compressor,
an expansion valve for expanding the refrigeration medium condensed by the condenser,
an evaporator for evaporating the refrigeration medium expanded by the expansion valve,
a coolant supply pipe for supplying coolant heat exchanged with the evaporator to an external load,
a coolant outlet temperature measuring part for measuring a coolant outlet temperature of the coolant flowing through the coolant supply pipe,
a coolant return pipe for performing heat exchange with the external load and for returning the coolant to the evaporator, and

a coolant inlet temperature measuring part for measuring a coolant inlet temperature of the coolant flowing through the coolant return pipe;
which performs control so that the coolant outlet temperature is a preset coolant outlet temperature; and **characterised in that** the control method for the heat source apparatus comprises:

executing a low-load mode in which stopping and starting of the heat source apparatus is repeatedly controlled when the coolant inlet temperature measured by the coolant inlet temperature measuring part is equal to or lower than a first temperature forming a prescribed temperature difference with respect to the preset coolant outlet temperature,
executing a stop limit mode for stopping the heat source apparatus when the coolant inlet temperature or the coolant outlet temperature is equal to or lower than a second temperature below the first temperature.

**Patentansprüche**

1. Wärmequellenvorrichtung umfassend:

einen Verdichter zum Verdichten eines Kältemittels;
einen Kondensator zum Kondensieren des durch den Verdichter verdichteten Kältemittels;
ein Expansionsventil zum Expandieren des durch den Kondensator kondensierten Kältemittels;
einen Verdampfer zum Verdampfen des durch das Expansionsventil expandierten Kältemittels;
eine Kühlmittelzuführungsleitung zum Zuführen von Kühlmittelwärme, die mit dem Verdampfer ausgetauscht wird, an eine externe Last;
ein Kühlmittelauslasstemperatur-Messteil zum Messen einer Kühlmittelauslasstemperatur des durch die Kühlmittelzuführungsleitung strömenden Kühlmittels;
eine Kühlmittelrückführungsleitung zum Durchführen des Wärmeaustausches mit der externen Last und zum Rückführen des Kühlmittels an den Verdampfer;
ein Kühlmitteleinlasstemperatur-Messteil zum Messen einer Kühlmitteleinlasstemperatur des durch die Kühlmittelrückführungsleitung strömenden Kühlmittels; und
eine Steuereinheit zum Durchführen der Steuerung, sodass die Kühlmittelauslasstemperatur eine voreingestellte Kühlmittelauslasstemperatur ist,
**dadurch gekennzeichnet dass**,
die Steuereinheit einen Niedriglastmodus hat, in dem die Wärmequellenvorrichtung gesteuert wird, um wiederholt zwischen Stoppen und Starten umzuschalten, wenn die durch das Kühlmitteleinlasstemperatur-Messteil gemessene Kühlmitteleinlasstemperatur gleich oder niedriger als eine erste Temperatur ist, die einen vorgeschriebenen Temperaturunterschied in Bezug auf die voreingestellte Kühlmitteleinlasstemperatur bildet, und wobei die Steuereinheit einen Stoppbegrenzungsmodus hat, in dem die Wärmequellenvorrichtung gestoppt wird, wenn die Kühlmitteleinlasstemperatur oder die Kühlmittelauslasstemperatur gleich oder niedriger als eine zweite Temperatur unter der ersten Temperatur ist.

2. Wärmequellenvorrichtung nach Anspruch 1, wobei die zweite Temperatur niedriger als die voreingestellte Kühlmittelauslasstemperatur ist.

3. Wärmequellenvorrichtung nach Anspruch 1 oder 2, wobei die zweite Temperatur gleich oder höher als eine Mindesttemperatur ist, welche die externe Last zulässt.

4. Wärmequellenvorrichtung nach einem der Ansprüche 1 bis 3, wobei die Steuereinheit selektiv zwischen dem Niedriglastmodus und dem Stoppbegrenzungsmodus umschalten kann.

5. Wärmequellenvorrichtung nach Anspruch 4, wobei die Steuereinheit während des Betriebs der Wärmequellenvorrichtung selektiv zwischen jedem der Modi umschalten kann und beim Umschalten vom Stoppbegrenzungsmodus zum Niedriglastmodus der Niedriglastmodus ausgeführt wird, nachdem eine vorgeschriebene Zeitspanne abgelaufen ist.

6. Wärmequellenvorrichtung nach Anspruch 4 oder 5, weiter umfassend:

ein Kühlmittelzuführungsteil zum Zuführen von Kühlmittel zum Absorbieren von Kondensationswärme von dem durch den Kondensator strömenden Kältemittel,

wobei die Steuereinheit den Stoppbegrenzungsmodus auswählen kann, wenn die Temperatur des in den Kondensator strömenden Kühlmittels bei einem vorgeschriebenen Wert oder darunter ist.

7. Wärmequellenvorrichtung nach einem der Ansprüche 1 bis 6, wobei der Kühlmittelauslasstemperatur-Messteil und/oder der Kühlmitteleinlasstemperatur-Messteil eine Vielzahl von Temperaturfühlern umfasst, die an unterschiedlichen Positionen in einer Umfangsrichtung an einer identischen radialen Position in einem identischen Querschnitt der Kühlmittelzuführungsleitung und/oder der Kühlmittelrückführungsleitung bereitgestellt sind, und die Steuereinheit einen Durchschnittswert der Ausgabewerte von jedem Temperaturfühler verwendet.

8. Wärmequellensystem umfassend eine Vielzahl der Wärmequellenvorrichtungen nach einem der Ansprüche 1 bis 7.

9. Steuerverfahren für eine Wärmequellenvorrichtung, welches beinhaltet

einen Verdichter zum Verdichten eines Kältemittels;
einen Kondensator zum Kondensieren des durch den Verdichter verdichteten Kältemittels;
ein Expansionsventil zum Expandieren des durch den Kondensator kondensierten Kältemittels;
einen Verdampfer zum Verdampfen des durch das Expansionsventil expandierten Kältemittels;
eine Kühlmittelzuführungsleitung zum Zuführen von Kühlmittelwärme, die mit dem Verdampfer an eine externe Last ausgetauscht wird;
ein Kühlmittelauslasstemperatur-Messteil zum Messen einer Kühlmittelauslasstemperatur des durch die Kühlmittelzuführungsleitung strömenden Kühlmittels;
eine Kühlmittelrückführungsleitung zum Durchführen des Wärmeaustausches mit der externen Last und zum Rückführen des Kühlmittels an den Verdampfer; und
ein Kühlmitteleinlasstemperatur-Messteil zum Messen einer Kühlmitteleinlasstemperatur des durch die Kühlmittelrückführungsleitung strömenden Kühlmittels;
das eine Steuerung durchführt, sodass die Kühlmittelauslasstemperatur eine voreingestellte Kühlmittelauslasstemperatur ist; und
**dadurch gekennzeichnet dass** das Steuerverfahren für die Wärmequellenvorrichtung umfasst:

Ausführen eines Niedriglastmodus, in dem das Stoppen und Starten der Wärmequellenvorrichtung wiederholt gesteuert wird, wenn die durch das Kühlmitteleinlasstemperatur-Messteil gemessene Kühlmitteleinlasstemperatur gleich oder niedriger ist als eine erste Temperatur, die einen vorgeschriebene Temperaturunterschied in Bezug auf die voreingestellte Kühlmitteleinlasstemperatur bildet,
Ausführen eines Stoppbegrenzungsmodus zum Stoppen der Wärmequellenvorrichtung, wenn die Kühlmitteleinlasstemperatur oder die Kühlmittelauslasstemperatur gleich oder niedriger als eine zweite Temperatur unter der ersten Temperatur ist.

**Revendications**

1. Appareil de source de chaleur comprenant :

un compresseur pour comprimer un agent de réfrigération ;
un condenseur pour condenser l'agent de réfrigération comprimé par le compresseur ;
un détendeur pour dilater l'agent de réfrigération condensé par le condenseur ;
un évaporateur pour évaporer l'agent de réfrigération dilaté par le détendeur ;
un tuyau d'alimentation de liquide de refroidissement pour alimenter un liquide de refroidissement ayant subi un échange de chaleur avec l'évaporateur à une charge externe ;
une partie de mesure de température de sortie de liquide de refroidissement pour mesurer une température de sortie de liquide de refroidissement du liquide de refroidissement s'écoulant à travers le tuyau d'alimentation de liquide de refroidissement ;
un tuyau de retour de liquide de refroidissement pour effectuer un échange de chaleur avec la charge externe et pour ramener le liquide de refroidissement à l'évaporateur;
une partie de mesure de température d'entrée de liquide de refroidissement pour mesurer une température d'entrée de liquide de refroidissement du liquide de refroidissement s'écoulant à travers le tuyau de retour de liquide de refroidissement ; et
une unité de commande pour effectuer une commande de sorte que la température de sortie de liquide de refroidissement soit une température de sortie de liquide de refroidissement préréglée,

**caractérisé en ce que**

l'unité de commande a un mode faible charge dans lequel l'appareil de source de chaleur est commandé pour commuter de façon répétée entre arrêt et démarrage quand la température d'entrée de liquide de refroidissement mesurée par la partie de mesure de température d'entrée de liquide de refroidissement est égale ou inférieure à une première température formant une différence de température prescrite par rapport à la température de sortie de liquide de refroidissement préréglée, et

dans lequel l'unité de commande a un mode limite d'arrêt dans lequel l'appareil de source de chaleur est arrêté quand la température d'entrée de liquide de refroidissement ou la température de sortie de liquide de refroidissement est égale ou inférieure à une deuxième température inférieure à la première température.

2. Appareil de source de chaleur selon la revendication 1, dans lequel la deuxième température est inférieure à la température de sortie de liquide de refroidissement préréglée.

3. Appareil de source de chaleur selon la revendication 1 ou 2, dans lequel la deuxième température est égale ou supérieure à une température minimale que permet la charge externe.

4. Appareil de source de chaleur selon l'une des revendications 1 à 3, dans lequel l'unité de commande peut commuter sélectivement entre le mode faible charge et le mode limite d'arrêt.

5. Appareil de source de chaleur selon la revendication 4, dans lequel l'unité de commande peut commuter sélectivement entre chacun des modes durant le fonctionnement de l'appareil de source de chaleur, et lors de la commutation du mode limite d'arrêt au mode faible charge, le mode faible charge est exécuté après qu'une période de temps prescrite se soit écoulée.

6. Appareil de source de chaleur selon la revendication 4 ou 5, comprenant en outre :

une partie d'alimentation de liquide de refroidissement pour alimenter un liquide de refroidissement pour absorber de la chaleur de condensation provenant de l'agent de réfrigération s'écoulant à travers le condenseur, dans lequel, quand la température du liquide de refroidissement s'écoulant dans le condenseur est à une valeur prescrite ou moins, l'unité de commande peut sélectionner le mode limite d'arrêt.

7. Appareil de source de chaleur selon l'une des revendications 1 à 6, dans lequel la partie de mesure de température de sortie de liquide de refroidissement et/ou la partie de mesure de température d'entrée de liquide de refroidissement comprennent une pluralité de capteurs de température fournis à des positions différentes dans une direction circonférentielle à une position radiale identique dans une section transversale identique du tuyau d'alimentation de liquide de refroidissement et/ou du tuyau de retour de liquide de refroidissement, et l'unité de commande utilise une valeur moyenne des valeurs de sortie provenant de chaque capteur de température.

8. Système de source de chaleur comprenant une pluralité des appareils de source de chaleur selon l'une des revendications 1 à 7.

9. Procédé de commande pour un appareil de source de chaleur qui inclut

un compresseur pour comprimer un agent de réfrigération,
un condenseur pour condenser l'agent de réfrigération comprimé par le compresseur,
un détendeur pour dilater l'agent de réfrigération condensé par le condenseur,
un évaporateur pour évaporer l'agent de réfrigération dilaté par le détendeur,
un tuyau d'alimentation de liquide de refroidissement pour alimenter un liquide de refroidissement ayant subi un échange de chaleur avec l'évaporateur à une charge externe,
une partie de mesure de température de sortie de liquide de refroidissement pour mesurer une température de sortie de liquide de refroidissement du liquide de refroidissement s'écoulant à travers le tuyau d'alimentation de liquide de refroidissement ;
un tuyau de retour de liquide de refroidissement pour effectuer un échange de chaleur avec la charge externe et pour ramener le liquide de refroidissement à l'évaporateur; et
une partie de mesure de température d'entrée de liquide de refroidissement pour mesurer une température d'entrée de liquide de refroidissement du liquide de refroidissement s'écoulant à travers le tuyau de retour de liquide de refroidissement ;
qui effectue une commande de sorte que la température de sortie de liquide de refroidissement soit une température de sortie de liquide de refroidissement préréglée ; et

**caractérisé en ce que** le procédé de commande pour l'appareil de source de chaleur comprend :

l'exécution d'un mode charge faible dans lequel l'arrêt et le démarrage de l'appareil de source de chaleur sont commandés de façon répétée quand la température d'entrée de liquide de refroidissement mesurée par la partie de mesure de température d'entrée de liquide de refroidissement est égale ou inférieure à une première température formant une différence de température prescrite par rapport à la température de sortie de liquide de refroidissement préréglée,

l'exécution d'un mode limite d'arrêt pour arrêter l'appareil de source de chaleur quand la température d'entrée de liquide de refroidissement ou la température de sortie de liquide de refroidissement est égale ou inférieure à une deuxième température inférieure à la première température.

FIG. 1

TO CONTROL UNIT

TO CONTROL UNIT

EP 2 075 515 B1

# FIG. 2

# FIG. 3

# FIG. 4

# FIG. 5

FIG. 6

EP 2 075 515 B1

# FIG. 7

**EP 2 075 515 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI510186 B
- JP 2003336913 A